(19) Europäisches Patentamt
European Patent Office
Office européen des brevets

(11) **EP 3 293 114 B1**

(12) **EUROPEAN PATENT SPECIFICATION**

(45) Date of publication and mention
of the grant of the patent:
**10.07.2019 Bulletin 2019/28**

(51) Int Cl.:
***B64C 27/57*** *(2006.01)*     ***B64C 13/10*** *(2006.01)*
***B64D 43/00*** *(2006.01)*     ***B64D 45/00*** *(2006.01)*
***G05D 1/06*** *(2006.01)*     ***G05D 1/08*** *(2006.01)*

(21) Application number: **17190585.4**

(22) Date of filing: **23.02.2015**

(54) **VERTICAL AXIS SOFT LANDING CONTROL**

STEUERUNG MIT VERTIKALER ACHSE ZUR WEICHEN LANDUNG

COMMANDE D'ATTERRISSAGE EN DOUCEUR À AXE VERTICAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2014 US 201414259198**

(43) Date of publication of application:
**14.03.2018 Bulletin 2018/11**

(62) Document number(s) of the earlier application(s) in
accordance with Art. 76 EPC:
**15156097.6 / 2 937 283**

(73) Proprietor: **Sikorsky Aircraft Corporation
Stratford, CT 06615 (US)**

(72) Inventors:
• **LITWINOWICZ, Anthony
Derby, CT 06418 (US)**
• **SAHASRABUDHE, Vineet
Cheshire, CT 06410 (US)**
• **FAYNBERG, Alex
Cheshire, CT 06410 (US)**
• **KNAG, John
New Boston, NH 03070 (US)**
• **FELL, William
Palm City, FL 34990 (US)**

(74) Representative: **Schmitt-Nilson Schraud Waibel
Wohlfrom
Patentanwälte Partnerschaft mbB
Pelkovenstraße 143
80992 München (DE)**

(56) References cited:
**US-A1- 2006 071 817    US-A1- 2011 202 207**

**Description**

An aircraft, such as a rotorcraft, may be susceptible to hard landings when flying in configurations that are heavier than the basic design gross weight (BDGW) configuration. A hard landing may be detected by one or more systems and may be triggered by excessive acceleration for a given configuration. Detection of a hard landing may trigger a maintenance action for the aircraft, reducing operational durability.

Additionally, diminished visual environment (DVE) conditions are known to increase pilot workload. For example, a pilot may have to land an aircraft using only instrument readings. Aircraft operations in DVE conditions (e.g., brownout, whiteout, dark nights) are inherently dangerous due to the inability of the pilot to see obstacles and/or the ground. While some information is available through sensors, such as downward looking radars and thermal imagining or infrared systems, these technologies increase pilot workload and further divide the pilot's attention between multiple displays that need constant monitoring.

US 2011/202207 shows a device comprising means for generating and applying to an aircraft protecting orders avoiding a flight with an excessive descent rate.

US 2006/071817 shows a tactile warning system for warning a helicopter pilot of a pre-selected altitude during a landing maneuver includes a collective control arm for control of the aircraft and a tactile warning device operatively connected to the collective control arm. The system includes a radio altimeter for sensing the actual altitude, a computer and keyboard for inputting a pre-selected height above the ground into the computer memory. A signal generator generates a signal indicative of the actual altitude as the aircraft approaches the ground. Then, when the actual altitude is equal to or less then the pre-selected altitude the system activates the tactile device. The warning system indicative of reaching a pre-selected height is also combined with a tactile warning system for avoiding "hot starts" and for avoiding other dangerous conditions.

The invention is directed to a method comprising: obtaining data from one or more sensors through a processing device including a measured rate of descent of an aircraft and a measured distance of the aircraft from at least one of an obstacle and the ground; processing, by the processing device, the data, including a sensed weight of the aircraft, to generate a flight envelope including a predetermined deceleration profile; and applying a tactile cue to an inceptor operatively associated with the aircraft to encourage manipulation of the inceptor to a desired position to maintain the predetermined deceleration profile within the flight envelope to automate landing of the aircraft.

Particular embodiments may include any of the following optional features, alone or in combination:
The inceptor may be associated with one or more flight controls.

The inceptor may be associated with at least one of: a collective, a cyclic, and an anti-torque pedal.

The tactile cue may comprise at least one of a soft stop, a stick shaker, and a detent.

The data further may pertain to at least one pilot command.

The tactile cue may be selected to encourage a pilot to operate the aircraft at an optimal point within the flight envelope.

The optimal point within the flight envelope may be selected to provide a soft landing of the aircraft.

The method may comprise determining, by a processing device, that the data indicates that the rate of descent exceeds a first threshold based on the measured distance being less than a second threshold; and automating a landing of the aircraft based on the determination.

The present disclosure is illustrated by way of example and not limited in the accompanying figures in which like reference numerals indicate similar elements.

FIG. 1A is a general perspective side view of an exemplary rotary wing aircraft;

FIG. 1B is a schematic block diagram illustrating an exemplary computing system;

FIG. 2 is a block diagram of an exemplary system environment; and

FIG. 3 illustrates a flow chart of an exemplary method.

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems, and methods are described for providing a cue or indication to a pilot to land an aircraft (e.g., a rotorcraft) at a proper speed. In some embodiments, a landing may be automated to ensure a soft landing. A landing may be automated when a descent rate that exceeds a threshold has been commanded within a threshold distance of an object or the ground.

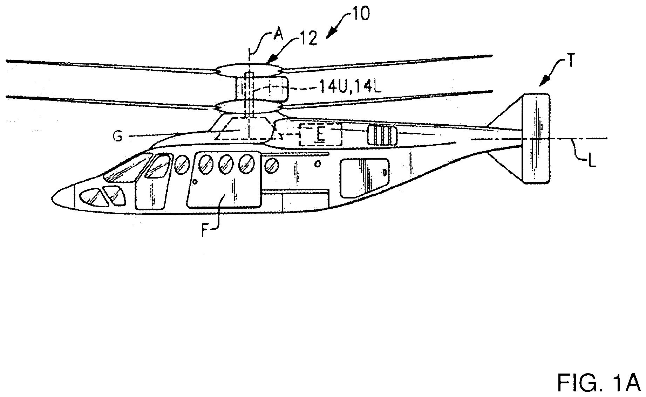

FIG. 1A illustrates an exemplary vertical takeoff and landing (VTOL) rotary wing aircraft 10. The aircraft 10 is shown as having a dual, counter-rotating main rotor system 12, which rotates about a rotating main rotor shaft 14U, and a counter-rotating main rotor shaft 14L, both about an axis of rotation A. Other types of configurations may be used in some embodiments, such as a single rotor system 12.

The aircraft 10 includes an airframe F which supports the main rotor system 12 as well as an optional translational thrust system T which provides translational thrust during high speed forward flight, generally parallel to an aircraft longitudinal axis L.

A main gearbox G located above the aircraft cabin drives the rotor system 12. The translational thrust system T may be driven by the same main gearbox G which drives the rotor system 12. The main gearbox G is driven by one or more engines E. As shown, the main gearbox G may be interposed between the engines E, the rotor system 12, and the translational thrust system T.

Although a particular counter-rotating, coaxial rotor system aircraft configuration is illustrated in the embodiment of FIG. 1A, other rotor systems and other aircraft types such as tilt-wing and tilt-rotor aircrafts may benefit from the present disclosure.

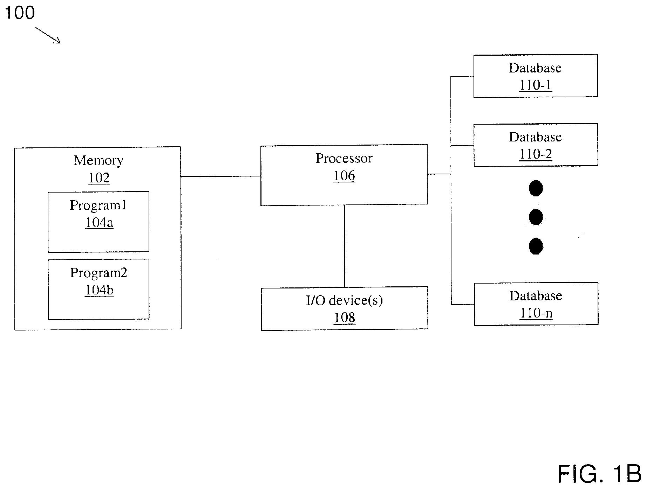

Referring to FIG. 1B, an exemplary computing system 100 is shown. Computing system 100 may be part of a flight control system of the aircraft 10. The system 100 is shown as including a memory 102. The memory 102 may store executable instructions. The executable instructions may be stored or organized in any manner and at any level of abstraction, such as in connection with one or more applications, processes, routines, procedures, methods, etc. As an example, at least a portion of the instructions are shown in FIG. 1B as being associated with a first program 104a and a second program 104b.

The instructions stored in the memory 102 may be executed by one or more processors, such as a processor 106. The processor 106 may be coupled to one or more input/output (I/O) devices 108. In some embodiments, the I/O device(s) 108 may include one or more of a keyboard or keypad, a touchscreen or touch panel, a display screen, a microphone, a speaker, a mouse, a button, a remote control, a control stick, a joystick, a printer, a telephone or mobile device (e.g., a smartphone), a sensor, etc. The I/O device(s) 108 may be configured to provide an interface to allow a user to interact with the system 100.

As shown, the processor 106 may be coupled to a number 'n' of databases, 110-1, 110-2, ... 110-n. The databases 110 may be used to store data, such as data obtained from one or more sensors (e.g., accelerometers). In some embodiments, the data may pertain to an aircraft's measured altitude and sink rate.

The system 100 is illustrative. In some embodiments, one or more of the entities may be optional. In some embodiments, additional entities not shown may be included. In some embodiments, the entities may be arranged or organized in a manner different from what is shown in FIG. 1B. For example, in some embodiments, the memory 102 may be coupled to or combined with one or more of the databases 110.

In some embodiments, a control system may use an aircraft's measured altitude and sink rate to institute limitations on the sink rate that can be commanded by the pilot when the aircraft is near an object or the ground. Through an analysis and evaluation of what sink rates correspond to hard landings, a maximum allowable decent profile can be generated. This profile can include a deceleration profile that allows for higher sink rates further from the ground.

In some embodiments, a deceleration profile may take the form:

$$v_i^2 = v_f^2 - 2ad,$$

where $v_i$ is the commanded sink rate, $v_f$ is the desired touchdown sink rate, d is the distance from the target altitude for the touchdown sink rate, and a is the desired deceleration.

In some embodiments, a profile may be used with varying deceleration. In some embodiments, the profile can be scheduled based on sensed or measured aircraft weight to allow for more aggressive profiles at lower weights, or more conservative profiles at higher weights.

In some embodiments, sensed velocities and positions and an onboard mathematical model of aircraft dynamics may be used to estimate collective and cyclic stick deflections to adhere to one or more profiles. The enforcement of these deflections may be accomplished through cues or indications, such as tactile cues or indications. For example, soft stops (where a pilot feels a force in connection with, e.g., a stick), stick shakers (where a pilot feels a vibration in connection with, e.g., a stick), and detents may be used as cues or indications.

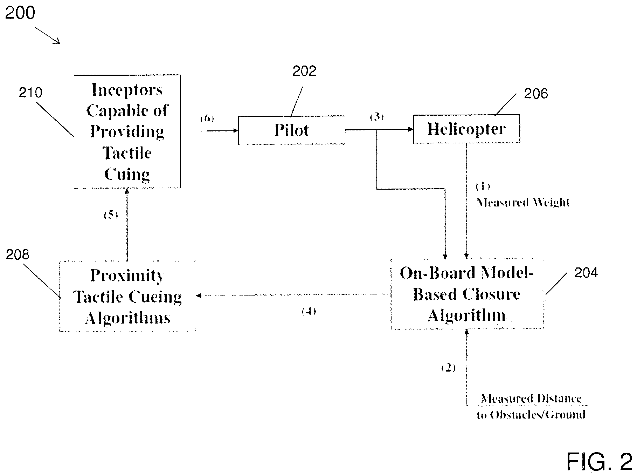

Turning now to FIG. 2, a block diagram of a system 200 in accordance with one or more embodiments is shown. The system 200 may be used to guide a pilot in operating (e.g., landing) an aircraft.

The system 200 may include a pilot 202 providing one or more commands (3) to a model-based algorithm 204. The algorithm 204 may be operative on the commands (3), potentially in combination with a measured weight (1) of an aircraft (e.g., helicopter 206) and a measured distance to obstacles or the ground (2). The algorithm 204 may generate a profile (4) based on one or more of the inputs (1)-(3). The profile (4) may correspond to an envelope that the helicopter 206 should operate within to provide for smooth operation (e.g., a soft landing), and may identify one or more optimal points or states of operation for doing so.

The profile (4) may be provided as input to one or more tactile cueing algorithms 208. The tactile cueing algorithms may generate one or more tactile cue commands (5) that may be used to direct an inceptor 210 to generate one or more tactile cues (6). A tactile cue (6) may be used to encourage the pilot to place one or more flight controls (e.g., collective, cyclic, anti-torque pedals, etc.) in a particular position or state, such that the aircraft operates within the profile (4).

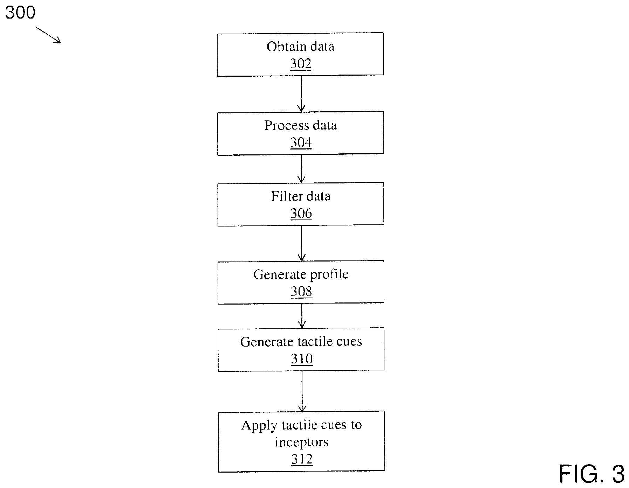

Turning now to FIG. 3, a flow chart of an exemplary method 300 is shown. The method 300 may be executed by one or more systems, components, or devices, such as those described herein (e.g., the system 100 and/or the system 200). The method 300 may be used to provide tactile cues to a pilot for operating an aircraft.

In block 302, data associated with the operation of the aircraft may be obtained. The data may pertain to one or more of: a measured weight of the aircraft, a measured distance between the aircraft and an obstacle or the ground, a rate of descent of the aircraft, and pilot commands. At least a portion of the data may be obtained from one or more sensors.

In block 304, the data of block 302 may be processed. For example, the data may be processed by the algorithm 204 of FIG. 2.

In block 306, the processed data of block 304 may be filtered. The filtering may be done to remove extraneous data, to reduce the impact of noise on one or more measurements, or to obtain a data profile that more closely mirrors or resembles the physical world.

In block 308, a profile may be generated. The profile may correspond to a flight envelope for one or more flight controls to provide for smooth operation (e.g., a soft landing) of the aircraft. The generated profile may be selected from memory or a database of profiles.

In block 310, one or more tactile cues may be generated. The tactile cues may be selected to encourage a pilot to operate the aircraft within the profile of block 308.

In block 312, the tactile cues may be applied to one or more inceptors (e.g., active inceptors).

The method 300 is illustrative. In some embodiments, one or more of the blocks or operations (or a portion thereof) may be optional. In some embodiments, the blocks or operations may execute in an order or sequence different from what is shown. In some embodiments, additional blocks or operations not shown may be included.

Embodiments of the disclosure may be used to reduce pilot workload in landing an aircraft. Tactile cues or indicators may assist a pilot in landing the aircraft, thereby allowing for spare capacity to perform other tasks. Safety may be improved, particularly in high workload landing zones. Maintenance actions resulting from hard landings may be reduced.

Embodiments may be implemented in connection with one or more control systems. In some embodiments, the control system may be implemented as one or more of a digital system and an analog system, potentially in connection with one or more of the components, devices, and/or systems described herein.

In some embodiments, aspects of the disclosure may be implemented in connection with a pre-existing platform. In this respect, aspects of the disclosure may serve as an "add-on" to a current or existing aircraft.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations. Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein. Aspects of the disclosure have been described in terms of illustrative embodiments thereof. Numerous other embodiments, modifications and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

This invention was made with Government support with the United States Army under Contract No. W911 W612. The Government has certain rights in this invention.

**Claims**

1. A method comprising:

obtaining data from one or more sensors through a processing device including a measured rate of descent of an aircraft (10) and a measured distance of the aircraft (10) from at least one of an obstacle and the ground; processing, by the processing device, the data, including a sensed weight of the aircraft, to generate a flight envelope including a predetermined deceleration profile; and applying a tactile cue to an inceptor (210) operatively associated with the aircraft (10) to encourage manipulation of the inceptor (210) to a desired position to maintain the predetermined deceleration profile within the flight envelope to automate landing of the aircraft (10).

**2.** The method according to claim 1, wherein the data further pertains to at least one pilot command.

**3.** The method according to any of claims 1 or 2, comprising:

determining, by a processing device, that the data indicates that the rate of descent exceeds a first threshold based on the measured distance being less than a second threshold; and automating a landing of the aircraft (10) based on the determination.

**Patentansprüche**

**1.** Verfahren, umfassend:

Erhalten von Daten von einem oder mehreren Sensoren durch eine Verarbeitungsvorrichtung, beinhaltend eine gemessene Sinkgeschwindigkeit eines Luftfahrzeugs (10) und einen gemessenen Abstand des Luftfahrzeugs (10) zu zumindest einem von einem Hindernis und dem Boden; Verarbeiten der Daten durch die Verarbeitungsvorrichtung, beinhaltend ein erfasstes Gewicht des Luftfahrzeugs, um einen Flugbereich zu erzeugen, der ein vorbestimmtes Entschleunigungsprofil beinhaltet; und Anwenden eines taktilen Zeichens auf ein Steuerorgan (210), das mit dem Luftfahrzeug (10) wirkverbunden ist, um Manipulation des Steuerorgans (210) in eine gewünschte Position zu fördern, um das vorbestimmte Entschleunigungsprofil innerhalb des Flugbereichs zu halten, um das Landen des Luftfahrzeugs (10) zu automatisieren.

**2.** Verfahren nach Anspruch 1, wobei sich die Daten ferner auf zumindest einen Pilotenbefehl beziehen.

**3.** Verfahren nach einem der Ansprüche 1 oder 2, umfassend:

Bestimmen, durch eine Verarbeitungsvorrichtung, dass die Daten angeben, dass die Sinkgeschwindigkeit eine erste Schwelle überschreitet, auf Grundlage dessen, dass der gemessene Abstand weniger als eine zweite Schwelle ist; und Automatisieren einer Landung des Luftfahrzeugs (10) auf Grundlage der Bestimmung.

**Revendications**

**1.** Procédé comprenant :

l'obtention de données à partir d'un ou de plusieurs capteurs à travers un dispositif de traitement incluant un taux de descente mesuré d'un aéronef (10) et une distance mesurée de l'aéronef (10) par rapport à au moins l'un d'un obstacle et du sol ; le traitement, par le dispositif de traitement, des données, incluant un poids détecté de l'aéronef, pour générer un domaine de vol incluant un profil de décélération prédéterminé ; et l'application d'un repère tactile à un initiateur (210) associé de manière fonctionnelle à l'aéronef (10) pour encourager la manipulation de l'initiateur (210) dans une position souhaitée pour maintenir le profil de décélération prédéterminé à l'intérieur du domaine de vol pour automatiser l'atterrissage de l'aéronef (10).

**2.** Procédé selon la revendication 1, dans lequel les données se rapportent en outre à au moins une commande de pilote.

**3.** Procédé selon l'une quelconque des revendications 1 ou 2, comprenant :

la détermination, par un dispositif de traitement, que les données indiquent que le taux de descente dépasse un premier seuil sur la base de la distance mesurée qui est inférieure à un second seuil ; et l'automatisation d'un atterrissage de l'aéronef (10) sur la base de la détermination.

FIG. 1A

100

Memory
102

Program1
104a

Program2
104b

Processor
106

I/O device(s)
108

Database
110-1

Database
110-2

Database
110-n

FIG. 1B

**FIG. 2**

300

```
┌─────────────────────┐
│     Obtain data     │
│        302          │
└─────────────────────┘
          │
          ▼
┌─────────────────────┐
│    Process data     │
│        304          │
└─────────────────────┘
          │
          ▼
┌─────────────────────┐
│     Filter data     │
│        306          │
└─────────────────────┘
          │
          ▼
┌─────────────────────┐
│   Generate profile  │
│        308          │
└─────────────────────┘
          │
          ▼
┌─────────────────────┐
│ Generate tactile cues│
│        310          │
└─────────────────────┘
          │
          ▼
┌─────────────────────┐
│ Apply tactile cues to│
│      inceptors       │
│        312          │
└─────────────────────┘
```

FIG. 3

**EP 3 293 114 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011202207 A
- US 2006071817 A